# EUROPEAN PATENT SPECIFICATION

(11) **EP 3 747 754 B1**
(45) Date of publication and mention of the grant of the patent: **07.02.2024**
(21) Application number: 17840562.7
(22) Date of filing: 16.11.2017
(51) Int. Cl.: B63H 8/00

(54) **CONTROL BAR FOR CONTROLLING A DRONE AS A TRACTION UNIT**
STEUERLEISTE ZUR STEUERUNG EINER ALS ANTRIEBSEINHEIT DROHNE
PALONNIER POUR COMMANDER UN DRONE EN TANT QU' UNITÉ DE TRACTION

(43) Date of publication of application: 09.12.2020
(73) Proprietor: Fernandez Fernandez, Bernardo, 33209 Gijón (Asturias) (ES); Fernandez Fernandez, Pablo, 33211 Gijon (ES); Fernandez Fernandez, Pelayo, 33211 Gijon (ES)
(72) Inventor: FERNANDEZ FERNANDEZ, Bernardo, 33211 Gijón (Asturias) (ES)
(74) Representative: González López-Menchero, Álvaro Luis
(86) International application number: PCT/ES2017/070756
(87) International publication number: WO 2019/097094

(56) References cited:
- KR-B1- 101 796 555
- US-A1- 2012 060 738
- US-A1- 2017 205 820
- US-B1- 8 968 043

## Description

### OBJECT OF THE INVENTION

The object of the present invention, as indicated by the title of the invention, is a control bar for controlling a drone as traction unit.

A control bar is a foam handle with a metal core, preferably aluminum, from the ends of which ropes or similar come out, joined at a single rope, the control bar used for gripping in sports in which the user is pulled, such as water skiing or similar.

The traction unit can be any of the known units, especially conceived for drones or similar.

The present invention is characterized in that the control bar is provided with means that enable control of the traction unit, making it unnecessary for there to be a third person to control the drone as traction unit.

Therefore, the present invention falls within the field of control bars as well as controls.

### BACKGROUND OF THE INVENTION

In performing the act of waterskiing, people ski on the water while holding on to a cord that is pulled by a powerful motorboat and do spectacular maneuvers on one or two skis. It is necessary to have a motorboat that is driven by a person.

Nowadays people are more inclined to use lighter units with sufficient power as a means for traction, such as drones or similar.

New developments have been attempted, such as a user on a wakeboard being pulled by a drone, having a cable for traction in which one end is attached to the drone and the other is attached to the user by means of a harness or similar.

Managing the drone with the drone's own controls while being pulled by the cable that goes from a harness worn by the user to the drone is quite complicated, to say the least, the act of simultaneously coordinating one's balance while controlling the drone proving to be a difficult task.
In the state of the art is known the document KR101796555 (B1) which discloses a traction apparatus using a drone, and more particularly, to a traction apparatus using a drone, capable of towing an operator controlling the drone and a carrier on which the operator rides along the progress direction of the drone by a thrust of the drone. The traction apparatus using a drone according to the present invention can improve the utilization of the drone by being applied to a leisure activity and a moving means by moving a user who controls the drone in the flight direction of the drone.

Therefore, the object of the present invention is to develop a device that simultaneously serves as a gripping means, point of traction and controls for the traction unit, developing a control bar such as the one described below, the essence of which is stated in the first claim.

### DESCRIPTION OF THE INVENTION

The object of the present invention is set out in the appended set of claims and it is a control bar for controlling a drone as a traction unit, wherein the control bar, in use, is connected to said drone by a traction cable, the control bar comprises a structure into which a control unit and control means are integrated.

The user holding the control bar, object of the invention, may be on skis, a canoe or motorboat, a surf board, or on water skates or on any surface that enables the user to move by means of a traction unit, the user being the one who has complete control of the traction unit by means of the control bar.

The structure of the support may be a bar or an integral assembly in the shape of a triangle.

The control means integrated into the control bar may have any form or combination of forms that is possible to develop, ranging from physical control means to electronic means based on voice recognition.

The control that will be carried out from the control bar be steering control, left and right, and acceleration, including control of elevation and descent.

The control means include the controls for the traction unit, said controls able to be thumbwheels integrated into the bar of the control bar, slighting protruding to facilitate the rotation thereof.

Alternatively, the controls are push buttons that when pressed produce the action corresponding to a turn to the side of the push button pressed or the acceleration and deceleration of the traction unit.

In another possible embodiment, the controls for steering are achieved through a gyroscope integrated into the bar of the control bar, such that when the bar is turned, the corresponding effect is that of a change of direction of the traction unit.

The controls for elevation and descent will be programmed such that they will produce a proportional elevation or descent of the traction unit according to the instructions given through the controls for elevation or descent.

As was previously stated, the alternative control means to the controls may be electronic processing means that allow for voice recognition and through which the voice is recognized and generating control commands for the traction unit.

The instruction for elevation or descent allows the user to jump over an obstacle (a wave, for example) or simply make a jump.

The bar of the control bar will have power supply means, either integrated into the bar itself, in which case it would be rechargeable from the outside, or the energy will be received from the traction unit by means of a power supply cable.

The control bar will have a communications unit housed in the bar that will be in charge of transmitting instructions carried out by the means integrated in the bar to the traction unit. Transmission from the communications unit to the traction unit may be through communication cables which would go from the bar to the traction unit, or may be wireless, using any of the known means, such as radiofrequency, WiFi, bluetooth, etc.

All of the functions and the management of the instructions are controlled by a control unit, to which the controls or control means (push buttons, gyroscope, thumbwheels, etc.), as well as the communications management unit, are connected.

The control bar may be used as a gripping element, a point of traction and for control of the traction unit, or may merely provide grip and control of the traction unit, being assembled in association with a harness placed on the user, the harness being the element that pulls the user, as in kite surfing.

Thanks to the design and integration of the control means of a traction unit in a control bar, it is possible to combine the features of a gripping point and traction for the user into a single unit, which also serves as control means for the traction unit, with the possibility of the user controlling the traction unit while at the same time being pulled and remaining fastened, all in a simple and intuitive way, making the unit a practical and simple assembly that allows for traction activities to be carried out without having to rely on a third person.

There is no danger of losing the control bar, since the traction units are prepared to return to the point where the bar was lost and, therefore, the user can recover the control bar.

Except when indicated otherwise, all of the technical and scientific elements used in this specification have the meaning commonly understood by a person with average skill in the art to which this invention belongs. When this invention is put into practice, methods and materials may be used that are similar or equivalent to the ones described in this specification.

Throughout the description and claims, the word "comprise" and its variants are not intended to exclude other technical characteristics, additions, components or steps. For those skilled in the art, other objects, advantages and characteristics of the invention may be deduced from both the description and the practical use of the invention.

### EXPLANATION OF THE FIGURES

As a complement to the present description, and for the purpose of helping to make the characteristics of the invention more readily understandable, in accordance with a preferred practical exemplary embodiment thereof, said description is accompanied by a set of drawings constituting an integral part of the same, which by way of illustration and not limitation represent the following.
In figure 1 we can see a general representation of a control bar joined to a traction unit.
In figure 2 we can see a first embodiment of the control bar.
In figure 3 we can see a second possible embodiment of the controls.
Figure 4 shows another alternative embodiment of the controls associated with wireless transmission means for sending instructions.
Figure 5 shows another alternative embodiment.
Figure 6 shows a user provided with a control bar such as the one that is the object of the invention, assembled in association with a harness placed on the user.

### PREFERRED EMBODIMENT OF THE INVENTION

With reference to the figures, described below is a preferred embodiment of the invention proposed.

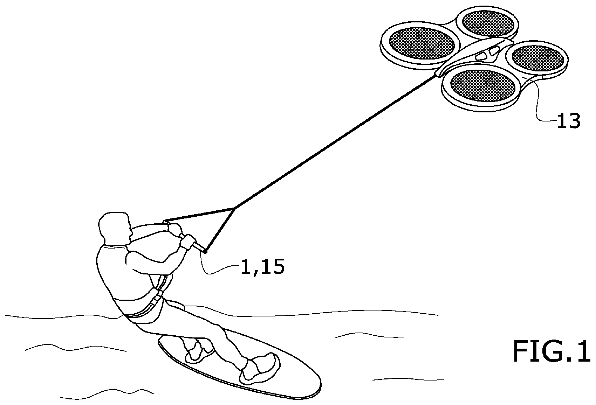

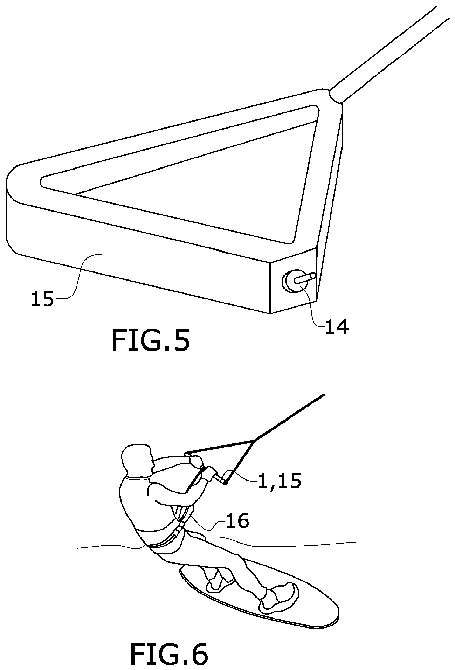

In figure 1 we can see a user attached and pulled by a traction unit (13), the user being attached to a control bar, which comprises a bar (1) or a single, integral piece (15), as shown in figure 5.

As was previously mentioned, the control bar comprises a support structure into which the controls for the traction unit are integrated. The support structure can be a bar (1), such as the one shown in figures 1 to 4, or it can be an integral assembly of a single piece (15), such as that which is shown in figure 5.

The controls may be made up of several different types, and any of the known types or combinations thereof may be used.

In one possible embodiment, the controls may comprise thumbwheels (2) that protrude from the outer surface of the bar (1), which could have up to three wheels, two of which for the control of the steering (right and left) and a third for controlling acceleration or speed. Optionally, it may have a fourth wheel for controlling elevation or descent, which will have proportional controls such that using the previously programmed controls will produce a proportional elevation or descent of the traction unit.

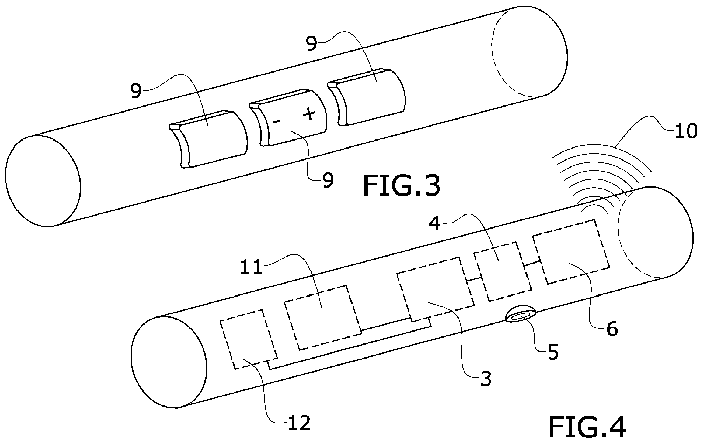

Figure 3 shows an alternative embodiment of the controls for the traction unit which, as can be seen, comprises three push buttons (9), two of which for controlling the steering and a third, shown in the center, for controlling the acceleration or deceleration of the traction unit.

Figure 4 shows another alternative embodiment, wherein control of the steering of the traction unit is done by means of an integrated gyroscope (11), in this case in the bar (1) of the control bar, associated with any of the means that could be used for controlling acceleration, in this case being a pressure sensor (12).

Figure 5 shows another alternative embodiment, wherein control of the steering and speed of the traction of the unit is done by means of a joystick (14), in this case shown mounted on the integral structure of the single piece, also able to be on the bar (1) of the control bar.

In all of the cases, within the support structure of the controls for the unit is a control unit (3) associated with a communications unit (6), both powered either externally by the traction unit or by a battery (4) integrated in the support structure and able to be recharged by means of a recharging point (5).

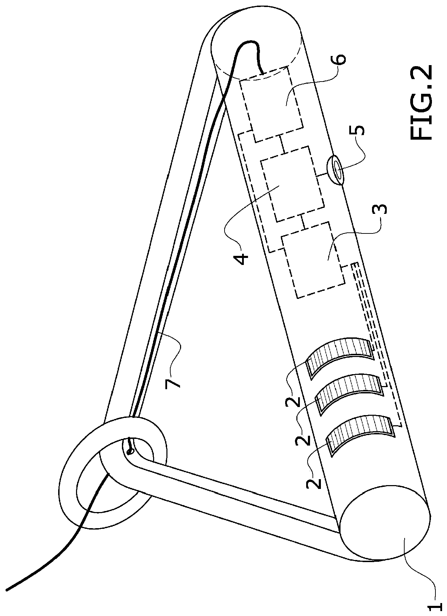

The communications unit (6) is in charge of transmitting the instructions from the control bar to the traction unit (13), which may be done by means of signal transmission cables (figure 2), or wirelessly (10), using any of the known means, (radiofrequency, WiFi, bluetooth, etc.).

Figure 5 shows how the support structure of the controls for the traction unit (13) is a single integral piece, preferably in the shape of a slightly asymmetric triangle, such that it can be gripped with one hand and be controlled by a joystick (14) with the other hand.

Lastly, as was previously indicated, the control bar, object of the invention, can be used alone, in which case it provides a means for gripping, a point of traction and a means of control, or in combination with a harness arranged on the user, the harness being the means by which the traction is transmitted to the user, the control bar being used for gripping and for controlling the traction unit.

As can be understood, the means used for controlling the steering, speed, elevation and descent may be any of the known means or combinations thereof, the same applying to the power supply of the control means and the transmission of the instructions from the control bar to the traction unit.

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A drone as a traction unit and a control bar for controlling said drone, wherein the control bar (1), in use, is connected to said drone by a traction cable, the control bar (1) comprises a support structure (1), (15) into which a control unit (3) and control means (2,9,12,14) are integrated which send instructions to the drone for the steering, right / left, acceleration / deceleration, elevation and descent of the drone (13),
wherein
- the support structure of the control means (2) is a single piece (15)
- the control bar is connectable to a harness (16)
- inside the support structure (1,15) the control unit (3) is associated with a communications unit (6) in charge of transmitting said instructions from the control unit (3) to the drone, the control unit (3) and the communication unit (6) being both powered by a battery (4) integrated in the support structure and able to be recharged by means of a recharging point (5) or by an external cable (7) that comes from the drone (13)

2. Drone and control bar according to claim 1,
**characterized in that** the means for controlling the steering right / left, acceleration / deceleration comprise thumbwheels (2) that protrude from the outer surface of the bar (1), two of them for controlling the steering (right and left) and a third for controlling acceleration or speed.

3. Drone and control bar according to claim 1,
**characterized in that** the means for controlling the steering right / left, acceleration / deceleration comprise three push buttons (9), two of them for controlling the steering and a third, represented in the center, for accelerating or decelerating the traction unit.

4. Drone and control bar according to claim 1,
**characterized in that** the means for controlling the steering right / left comprise a gyroscope (11)

5. Drone and control bar according to claim 1,
**characterized in that** the means for controlling the steering right / left and acceleration / deceleration comprise pressure sensors (12).

6. Drone and control bar according to claim 1,
**characterized in that** the means for controlling the steering right / left and acceleration / deceleration comprise a joystick (14).

7. Drone and control bar according to claim 1,
**characterized in that** the communications unit (6) is in charge of transmitting the instructions from the control bar to the traction unit (13) by means of signal transmission cables, or wirelessly (10), using any of the known means, (radiofrequency, WiFi, bluetooth, etc.).

8. Drone and control bar according to any of the claims 1 to 7, **characterized in that** the means for controlling the elevation and descent allow for a proportional action on the traction unit.

9. Drone and control bar according to claim 1,
**characterized in that** the control means are electronic processing means that allow for voice recognition and through which the voice is recognized and which generates control commands of the traction unit.

## Patentansprüche

1. Drohne als Traktionseinheit und Steuerstange zum Steuern der Drohne, wobei die Steuerstange (1) im Gebrauch mittels eines Traktionskabels mit der Drohne verbunden ist, die Steuerstange (1) eine Stützstruktur (1), (15) umfasst, in die eine Steuereinheit (3) und Steuermittel (2,9,12,14) integriert sind, die Anweisungen zur Lenkung, rechts/links, Beschleunigung/Verzögerung, Höhe und Sinkflug der Drohne (13) senden,
wobei
- die Stützstruktur der Steuermittel (2) ein einzelnes Stück (15) ist
- die Steuerstange mit einem Gurt (16) verbindbar ist
- die Steuereinheit (3) in der Stützstruktur (1,15) mit einer Kommunikationseinheit (6) verknüpft ist, die zum Übertragen der Anweisungen von der Steuereinheit (3) zur Drohne zuständig ist, wobei die Steuereinheit (3) und die Kommunikationseinheit (6) beide von einer Batterie (4) versorgt werden, die in die Stützstruktur integriert und in der Lage ist, mittels eines Ladepunktes (5) oder über ein externes Kabel (7), das von der Drohne (13) kommt, versorgt zu werden.

2. Drohne und Steuerstange nach Anspruch 1,
**dadurch gekennzeichnet, dass** die Mittel zum Steuern der Lenkung rechts/links, Beschleunigung/Verzögerung Rändelräder (2) umfassen, die von der Außenfläche der Stange (1) vorstehen, zwei von ihnen zum Steuern der Lenkung (rechts und links) und ein drittes zum Steuern von Beschleunigung oder Geschwindigkeit.

3. Drohne und Steuerstange nach Anspruch 1,
**dadurch gekennzeichnet, dass** die Mittel zum Steuern der Lenkung rechts/links, Beschleunigung/Verzögerung drei Druckknöpfe (9) umfassen, zwei von ihnen zum Steuern der Lenkung und ein dritter, der in der Mitte repräsentiert ist, zum Beschleunigen oder Verzögern der Traktionseinheit.

4. Drohne und Steuerstange nach Anspruch 1,
**dadurch gekennzeichnet, dass** die Mittel zum Steuern der Lenkung rechts/links ein Gyroskop (11) umfassen.

5. Drohne und Steuerstange nach Anspruch 1,
**dadurch gekennzeichnet, dass** die Mittel zum Steuern der Lenkung rechts/links und der Beschleunigung/Verzögerung Drucksensoren (12) umfassen.

6. Drohne und Steuerstange nach Anspruch 1,
**dadurch gekennzeichnet, dass** die Mittel zum Steuern der Lenkung rechts/links und der Beschleunigung/Verzögerung einen Joystick (14) umfassen.

7. Drohne und Steuerstange nach Anspruch 1,
**dadurch gekennzeichnet, dass** die Kommunikationseinheit (6) für das Übertragen der Anweisungen von der Steuerstange zur Traktionseinheit (13) mittels Signalübertragungskabeln oder drahtlos (10) unter Verwendung von beliebigen der bekannten Mittel (Funkfrequenz, WiFi, Bluetooth usw.) zuständig ist.

8. Drohne und Steuerstange nach einem der Ansprüche 1 bis 7, **dadurch gekennzeichnet, dass** die Mittel zum Steuern der Höhe und des Sinkflugs eine proportionale Aktion der Traktionseinheit erlauben.

9. Drohne und Steuerstange nach Anspruch 1,
**dadurch gekennzeichnet, dass** die Steuermittel elektronische Verarbeitungsmittel sind, die eine Spracherkennung erlauben und über die die Stimme erkannt wird und die die Steuerbefehle der Traktionseinheit erzeugen.

## Revendications

1. Drone en guise d'unité de traction et barre de contrôle pour contrôler ledit drone, dans lesquels la barre de contrôle (1), en utilisation, est reliée audit drone par un câble de traction, la barre de contrôle (1) comprend une structure de support (1), (15) dans laquelle sont intégrés une unité de contrôle (3) et des moyens de contrôle (2, 9, 12, 14) qui envoient des instructions au drone pour le pilotage, droite / gauche, accélération / décélération, élévation et descente du drone (13),
dans lesquels
- la structure support des moyens de contrôle (2) est d'une seule pièce (15)
- la barre de contrôle peut être reliée à un harnais (16)
- à l'intérieur de la structure support (1, 15) l'unité de contrôle (3) est associée à une unité de communications (6) chargée de transmettre lesdites instructions de l'unité de contrôle (3) au drone, l'unité de contrôle (3) et l'unité de communications (6) étant toutes deux alimentées par une batterie (4) intégrée dans la structure support et pouvant être rechargée au moyen d'un point de recharge (5) ou par un câble externe (7) qui vient du drone (13).

2. Drone et barre de contrôle selon la revendication 1,
**caractérisés en ce que** les moyens de contrôle du pilotage droite / gauche, accélération / décélération comprennent des molettes (2) qui font saillie de la surface externe de la barre (1), deux d'entre elles pour contrôler le pilotage (droite et gauche) et une troisième pour contrôler l'accélération ou la vitesse.

3. Drone et barre de contrôle selon la revendication 1,
**caractérisés en ce que** les moyens de contrôle du pilotage droite / gauche, accélération / décélération comprennent trois boutons poussoirs (9), deux d'entre eux pour contrôler le pilotage et un troisième, représenté au centre, pour accélérer ou décélérer l'unité de traction.

4. Drone et barre de contrôle selon la revendication 1,
**caractérisés en ce que** les moyens de contrôle du pilotage droite / gauche comprennent un gyroscope (11).

5. Drone et barre de contrôle selon la revendication 1,
**caractérisés en ce que** les moyens de contrôle du pilotage droite / gauche et accélération / décélération comprennent des capteurs de pression (12).

6. Drone et barre de contrôle selon la revendication 1,
**caractérisés en ce que** les moyens de contrôle de pilotage droite / gauche et accélération / décélération comprennent une manette (14).

7. Drone et barre de contrôle selon la revendication 1,
**caractérisés en ce que** l'unité de communications (6) est chargée de transmettre les instructions de la barre de contrôle à l'unité de traction (13) au moyen de câbles de transmission de signaux, ou sans fil (10), en utilisant l'un des moyens connus, (radiofréquence, Wi-Fi, Bluetooth, etc.).

8. Drone et barre de contrôle selon l'une quelconque des revendications 1 à 7, **caractérisés en ce que** les moyens de contrôle de l'élévation et de la descente permettent une action proportionnelle sur l'unité de traction.

9. Drone et barre de contrôle selon la revendication 1,
**caractérisés en ce que** les moyens de contrôle sont des moyens de traitement électronique qui permettent la reconnaissance vocale et grâce auxquels la voix est reconnue et qui génèrent des commandes de contrôle de l'unité de traction.
